# EUROPEAN PATENT APPLICATION

(11) **EP 3 939 874 A1**
(43) Date of publication of application: **19.01.2022**
(21) Application number: 21180504.9
(22) Date of filing: 21.06.2021
(51) Int. Cl.: B62M 3/08

(54) **CLEAT CAPABLE OF MULTI-STAGE POWER ADJUSTMENT**

(30) Priority: 14.07.2020 KR 20200086884
(71) Applicant: DNJA Co., Ltd., Yongin-Si, Gyeonggi-Do 17058 (KR)
(72) Inventor: KIM, Hark Moo, 17056 Yongin-si, Gyeonggi-do (KR)
(74) Representative: M. Zardi & Co S.A.

(57) **Abstract**

The cleat of the present invention integrated with a shoe has a dual structure of a movable upper part and a fixed lower part, so that an effect is achieved in that a rider moves a pedal shaft on the flat ground and the inclined ground by simply moving the shoe. It is convenient to switch between a first stage mode and a second stage mode on the flat ground by simply changing the location of a foot while riding the bicycle. Records can be renewed significantly efficiently by appropriately distributing power according to the terrain without wasting time during a game.

## Description

### BACKGROUND

### 1. Technical Field

The present invention relates to a cleat capable of multi-stage power control. More specifically, the present invention relates to a cleat capable of multi-stage power control that can improve speed by changing the location of a pedal shaft in a shoe during riding on the flat ground or during riding on a slope.

### 2. Description of the Related Art

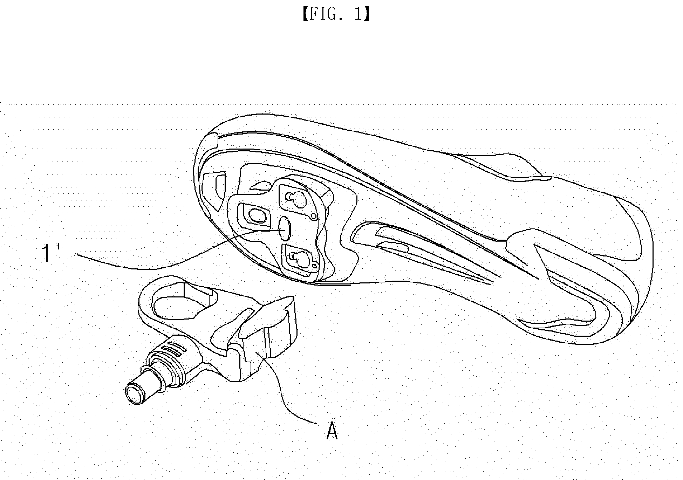

When a shoe is attached to the pedal of a bicycle or cycle corresponding to a two-wheeled manual driving vehicle in an integrated manner, a cleat is mounted on the lower surface of the shoe. As shown in FIG. 1, a pedal structure A is coupled below a cleat 1', a pedal shaft extending from the side of the structure A is connected to the arm or rod of the bicycle. While the bicycle is running, the cleats 1' and the pedal structure A cannot move relative to each other, and the location of the pedal shaft cannot be changed.

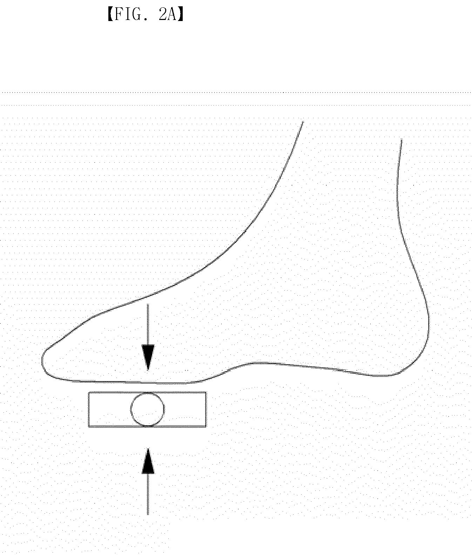

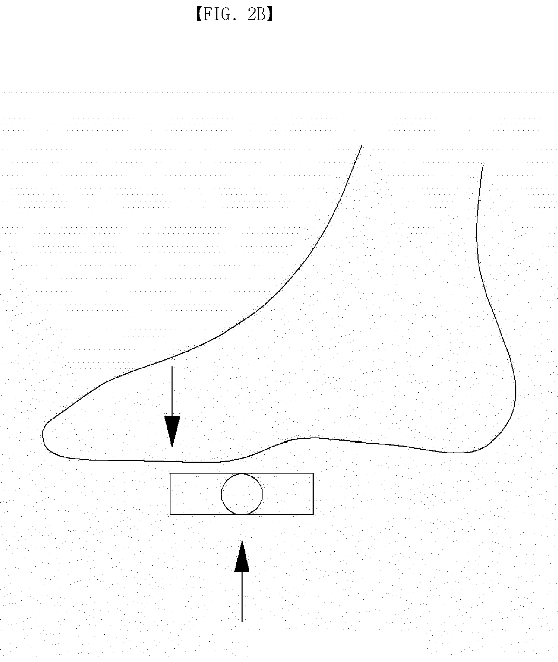

However, it is advantageous in terms of speed that the pedal shaft is positioned at the location of the yellow solid line shown in FIG. 2(A) when the bicycle is driven on flat ground. However, during riding on a slope such as an uphill road, it is advantageous in terms of speed to move the pedal shaft slightly backward to the location shown in FIG. 2(B). The reason for this is that torque can be increased by adding the weight of a rider to a pedal. However, since it is impossible to change the location of the pedal shaft during riding, it is common for most racers or riders to select one or the middle of the two modes and ride to a destination.

As for patent documents related to the cleat, Korean Utility Model Registration No. 20-0482581 discloses a technology in which a first cleat, a second cleat, and a third cleat are separately installed on the bottom surface of a shoes and the cleats are all non-slip types of cleats that do not move in the shoe.

Korean Patent No. 10-1977068 discloses a structure in which a cleat is divided into upper and lower parts, magnets are arranged in the respective parts so that a shoe and a pedal structure are combined by magnetic force, not a mechanical method, and the location of a pedal shaft is fixed.

In consideration of the above circumstances, the present invention has been devised so that the location of the pedal shaft may be conveniently moved relatively while the bicycle is running, so that the bicycle can be driven most optimally and most rapidly in accordance with the flat land and the slope.

### SUMMARY

Therefore, an object of the present invention is to provide a cleat that is capable of changing the location of a pedal shaft in multiple stages by improving the structure of the cleat that is used in a two-wheeled manual driving vehicle.

According to an aspect of the present invention, there is provided a cleat capable of multi-stage power control, wherein the cleat attached to a shoe connected to the pedal assembly of a two-wheeled manual driving vehicle is divided into an upper part, which is a movable body, and a lower part, which is a fixed body, and the location of a pedal shaft is variable in the shoe during the running of the two-wheeled manual driving vehicle.

A guide part may be formed in the upper part or lower part, a lock part accommodated in the guide part maybe formed in the lower part or upper part, and the upper part can rotate and move upward or downward with respect to the lower part.

The guide part may include a main guide, the main guide may include an upper space, a lower space formed opposite to the upper space, and a sliding portion connecting the upper and lower spaces, the lock part may include a main lock accommodated in the main guide and extending upward toward the upper part, and the main lock may be formed to be inclined from a longitudinal center line.

The main lock may have a size equal to or slightly smaller than the width of the upper and lower spaces.

The guide part may further include auxiliary guides formed alongside the main guide, the auxiliary guides may include an auxiliary upper space, an auxiliary lower space formed opposite to the auxiliary upper space, and an auxiliary sliding portion connecting between the auxiliary upper space and the auxiliary lower space, and the lock part may further include auxiliary locks that are accommodated in the auxiliary guides and extend upward toward the upper part.

The auxiliary guides may include a first guide formed on one side of the main guide and a second guide formed on an opposite side of the main guide, and the auxiliary locks may include a first lock accommodated in the first guide and a second lock accommodated in the second guide.

The upper part may be rotated in a first direction by the rotation of the shoe in the first direction, so that the main lock faces the sliding portion of the main guide, and the main lock may be moved toward the lower space along the sliding portion and accommodated in the lower space by the upward movement of the shoe.

In a state in which the main lock is accommodated in the lower space, the upper part may be rotated in a second direction opposite to the first direction by rotation of the shoe in the second direction, so that the main lock comes into contact with an inner surface of a lower space of the main guide and is locked.

According to another aspect of the present invention, there is provided a shoe including the cleat.

According to another aspect of the present invention, there is provided a two-wheeled manual driving vehicle including the shoe.

The two-wheeled manual driving vehicle may be a bicycle.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a photograph showing a cleat according to a related art;
FIG. 2(A) is a photograph showing the location of a pedal shaft on the flat ground;
FIG. 2(B) is a photograph showing a preferred location of the pedal shaft on the slope;
FIG. 3 is a perspective view of a cleat according to an embodiment of the present invention;
FIG. 4 is an exploded perspective view of the upper part and lower part of the cleat according to the embodiment of the present invention;
FIG. 5(A) shows an initial state in which the cleat of the present invention is first provided;
FIG. 5(B) is a view showing a case in which a rider rotates a left shoe outward in the clockwise direction in the state of FIG. 5(A);
FIG. 5(C) is a view showing a case in which the rider slides the shoe upward in the state of FIG. 5(B);
FIG. 5(D) is a view showing a state in which, after the lock part continues to move from FIG. 5(C) to a location near the lower end of the guide part again, the rider rotates the shoe counter clockwise, and the guide part and the lock part are locked together again;
FIG. 6 is a plan view showing the combined cleat 1 in a state in which a first stage is fixed;
FIG. 7 is a plan view showing the combined cleat 1 in a state in which the fixing of a first stage is released;
FIG. 8 is a plan view of the combined cleat showing a state in which the shoe is moved upward in the state of FIG. 7 and has just moved to a second stage.

### DETAILED DESCRIPTION

Each embodiment according to the present invention is merely an example for helping to understand the present invention, and the present invention is not limited to such embodiments. The present invention may include a combination of at least any one or more of individual components and individual functions included in each embodiment.

Although a bicycle is mainly described in the following embodiments of the present invention, the present invention may be applied to a cycle and exercise equipment, and these are all considered to be included in the "two-wheeled manual driving vehicle" defined by the present invention.

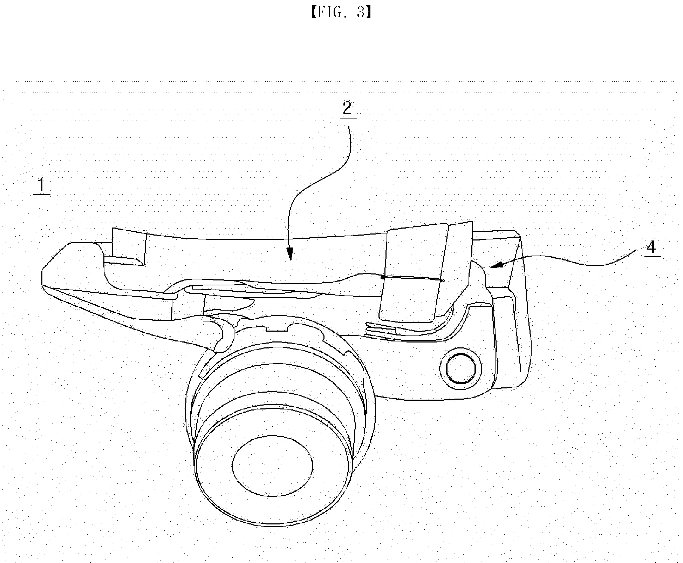

FIG. 3 is a perspective view of a cleat 1 according to an embodiment of the present invention. The cleat 1 of the present invention is divided into an upper part 2 and a lower part 4, and the upper part 2 and the lower part 4 are assembled into the cleat 1. The upper part 2 and the lower part 4 are relatively movable. More specifically, since the upper part 2 is coupled to the bottom surface of a shoe, a racer or rider moves the shoe to move the upper part 2, and the lower part 4 is fixed. A pedal assembly is attached to the lower part 4.

Since such cleats are attached to left and right shoes, two cleats are required. However, for the sake of convenience, the cleat 1 attached to a left shoe will be described as an example. It will be understood that a cleat attached to a right shoe has substantially the same structure, and the structures on the left and right sides are reversed.

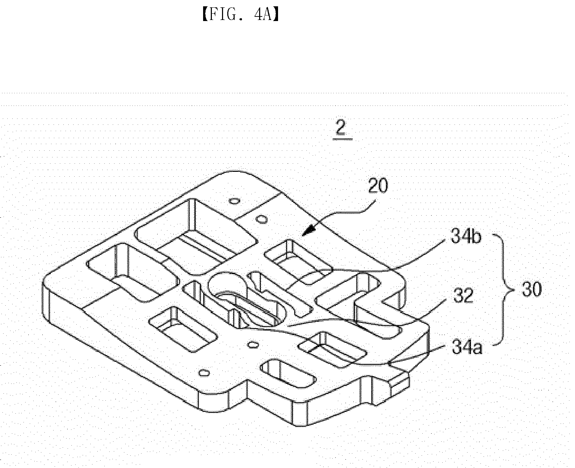

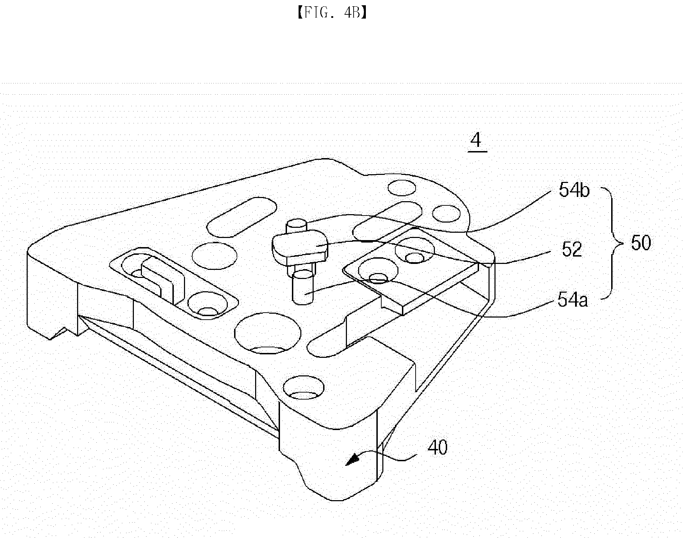

FIG. 4 is an exploded perspective view of the upper part 2 and lower part 4 of the cleat 1 according to the embodiment of the present invention. The right side of the drawing is the front side, i.e., the front part of the shoe, and the left side is the rear side. The upper part 2 and the lower part 4 have a streamlined shape in which the front thereof is thinner than the rear thereof, and are manufactured in the shape of a plate 20 and in the shape of a three-dimensional frame 40 as a whole.

The present invention is characterized by a guide part 30 including a main guide 32, a first guide 34a, and a second guide 34b formed in the upper part 2, and a lock part 50 including a main lock 52, a first lock 54a, and a second lock 54b formed in the lower part 4 to correspond to the guide part 30. Since parts or portions other than these parts do not form the gist of the present invention and various changes and modifications are possible, descriptions thereof will be omitted below.

Normally, the main lock 52 is accommodated and fixed in the main guide 32, the first lock 54a is accommodated and fixed in the first guide 34a, and the second lock 54b is accommodated and fixed in the second guide 34b. The fixed state is released by the rotation of the upper part 2. The guide part 30 is formed to pass through the plate 20 in the shape of slots, and the lock part 50 is fabricated in the shape of protrusions or columns extending upward to be fastened to the slots.

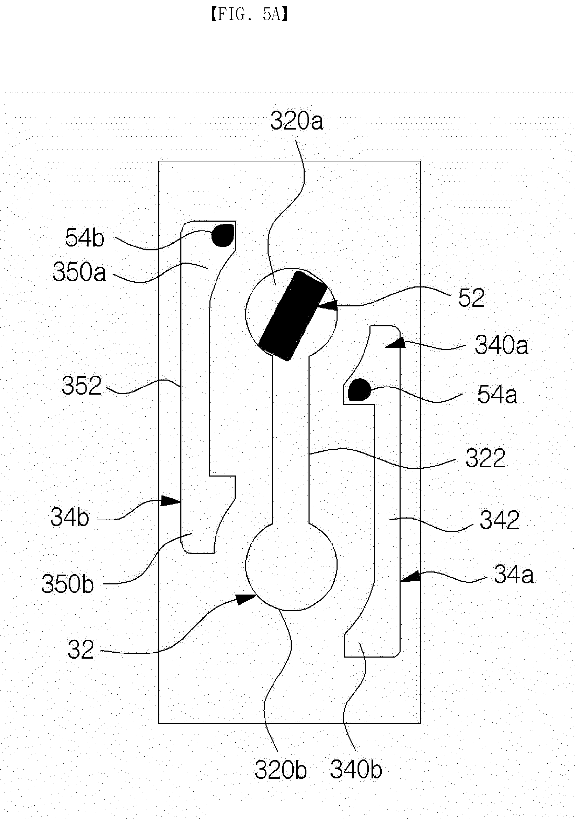

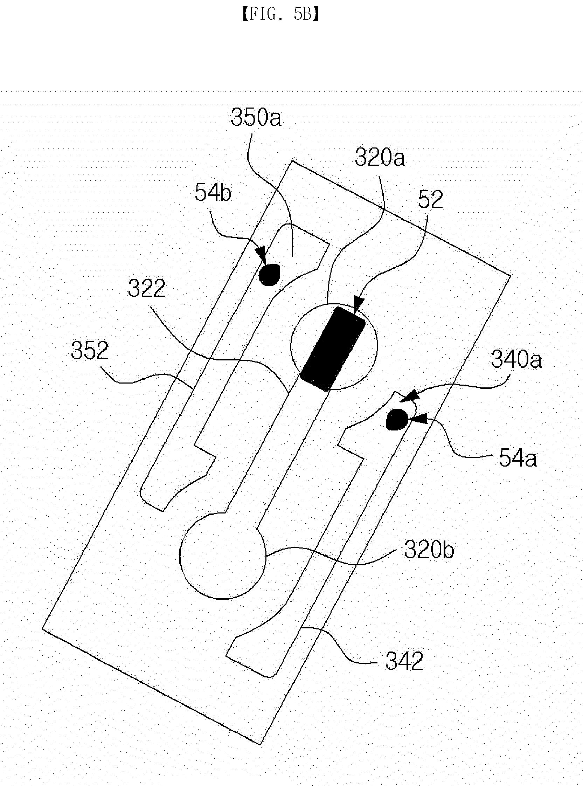

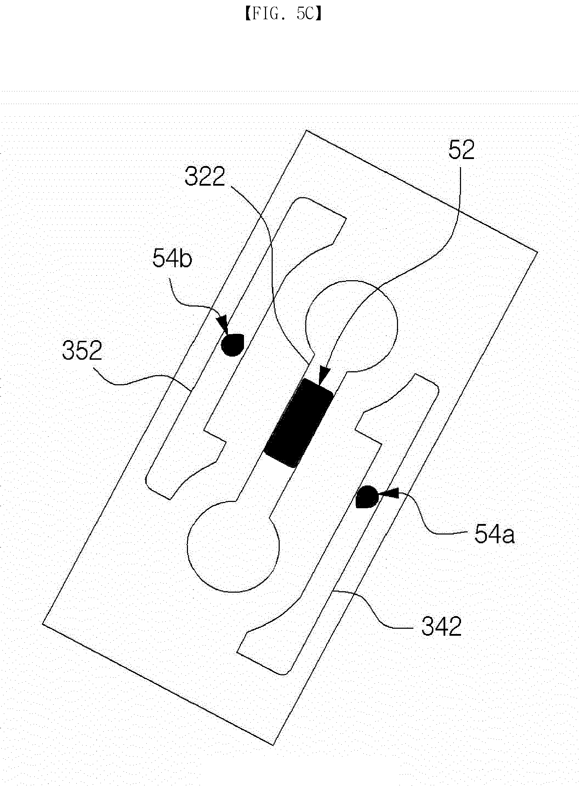

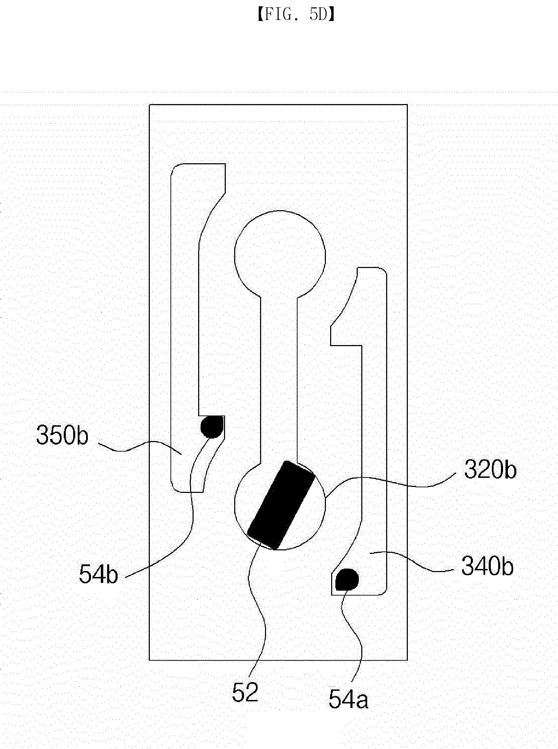

FIG. 5 shows views conceptually illustrating the combination of the two members in order to easily describe the operations of the guide part 30 of the upper part 2 and the lock part 50 of the lower part 4 of the present invention.

FIG. 5(A) shows an initial state in which the cleat 1 of the present invention is first provided.

The main guide 32 of the guide part 30 includes a circular upper space 320a, a lower space 320b formed opposite to the upper space 320a, and a sliding portion 322 configured to provide a linear path smaller than the diameter of the upper and lower spaces 320a and 320b between the two spaces. The first guide 34a includes a first upper space 340a having an inclined surface, a first lower space 340b formed on the opposite side in a shape symmetrical to the first upper space 340a, and a first sliding portion 342 configured to provide a linear path between the first upper and lower spaces 340a and 340b. A stepped surface or an inclined surface configured to prevent the movement of the first lock 54a is formed on a boundary surface where the first upper and lower spaces 340a and 340b meet the first sliding portion 342. In the same manner, the second guide 34b includes a second upper space 350a having an inclined surface, a second lower space 350b formed on the opposite side in a shape symmetrical to the second upper space 350a, and a second sliding portion 352 configured to provide a linear path between the second upper and lower spaces 350a and 350b. An inclined surface or a stepped surface configured to prevent the movement of the second lock 54a is formed on a boundary surface where the second upper and lower spaces 350a and 350b meet the second sliding portion 352.

The first guide 34a and the second guide 34b are symmetrical like a mirror with respect to the main guide 32. The reason for this is to match the installation positions of the main lock 52, the first lock 54a, and the second lock 54b. For the accurate movement of the locks, the linear lengths of the sliding portion 322, the first sliding portion 342, and the second sliding portion 352 are the same.

Next, the main lock 52 of the lock part 50 of the lower part 4 has a rectangular cross section in the plan view thereof, and is provided to be inclined from the longitudinal centerline. The length of the main lock 52 is equal to or slightly smaller than the diameter of the upper space 320a, so that it is caught on the inner surface of the upper space 320a and locked when the main lock 52 is accommodated in the upper space 320a.

The first lock 54a is a column having a circular or quasi-circular cross section, and is formed at a location where it is locked by being caught on the step surface of the first upper space 340a.

The second lock 54b is a column having a circular or quasi-circular cross section, and is formed at a location where it is locked by being caught on the inclined surface of the second upper space 350a.

As described above, in the initial state, the lock part50 is fastened to the guide part 30 and is firmly locked. This locking does not mean a closed or sealed locking without any gap, and a minute gap that occurs when the upper part 2 oscillates relative to the lower part 4 during intense driving can be tolerated.

FIG. 5(B) is a view showing a case in which a rider rotates the left shoe outward in the clockwise direction in the state of FIG. 5(A). When the cleat 1 is attached to the left shoe, it is convenient to operate the cleat 1 because the rider only needs to rotate the pedal slightly as if turning it outward while stepping on the pedal with the shoe. The rotation angle is equal to the angle at which the main lock 52 is inclined from the longitudinal centerline. The upper part 2 is rotated in response to the rotation of the shoe, and the lower part 4 is maintained at a fixed location. When the guide part 30 is rotated clockwise, each of the locks of the lock part 50 comes to a position where it can be released from the locked state as shown in the drawing.

FIG. 5(C) is a view showing a case in which the rider slides the shoe upward in the state of FIG. 5(B). The guide part 30 is moved upward while maintaining the inclined state, and the main lock 52, the first lock 54a, and the second lock 54b are relatively moved downward along the sliding part 322, the first sliding part 342, and the second sliding part 352, respectively.

FIG. 5(D) is a view showing a state in which after the lock part 50 continues to move from the state of FIG. 5(C) to a location near the lower end of the guide part 30 again, the rider rotates the shoe counterclockwise, and the guide part 30 and the lock part 50 are locked together again. When the rider continues to move the shoe, thus the upper part 2, from the state of FIG. 5(C), the main lock 52, the first lock 54a, and the second lock 54b are stopped at locations where they are accommodated in the lower space 320b, the first lower space 340b, and the second lower space 350b, respectively. In this case, the state corresponds to the state of FIG. 5(B)in terms of functionality. In this case, when the rider rotates the shoe counterclockwise in the opposite direction by the same inclination angle as described above, the upper part 2 returns to a parallel location, i.e., a location perpendicular to the pedal axis, and again the lock part 50 is fastened to the part 30 and is in a firmly locked state.

When FIG. 5(A) and FIG. 5(D)are compared with each other, FIG. 5(A) corresponds to a case in which the shoe and the upper part 2 are at a "first stage" location, which is a lower location, and FIG. 5(D)corresponds to a case where they are at a "second stage" location, which is a higher location. The original location of the pedal shaft does not change. Accordingly, when the shoe is changed from the first stage location to the second stage location, the pedal shaft moves relatively downward. In other words, it is in a state suitable for riding on a slope. It is obvious that the first stage location is a state suitable for riding on a flat surface.

In the case where the cleat 1 of the right shoe is also taken into consideration, when the racer or rider rotates the left foot and the right foot slightly outward at the same time, moves the shoes upward and then rotates them inward to align the two shoes, the first stage may be switched to second stage.

In order to re-switch from the second stage to the first stage, the racer or rider rotates the left foot and the right foot slightly outward at the same time, moves the shoes downward, and then rotates them inward to align the two shoes.

Based on the above description, a structure in which the upper part 2 and lower part 4 of the cleat 1 of FIG. 4 are combined will be additionally described in order to further help the understanding of the present invention.

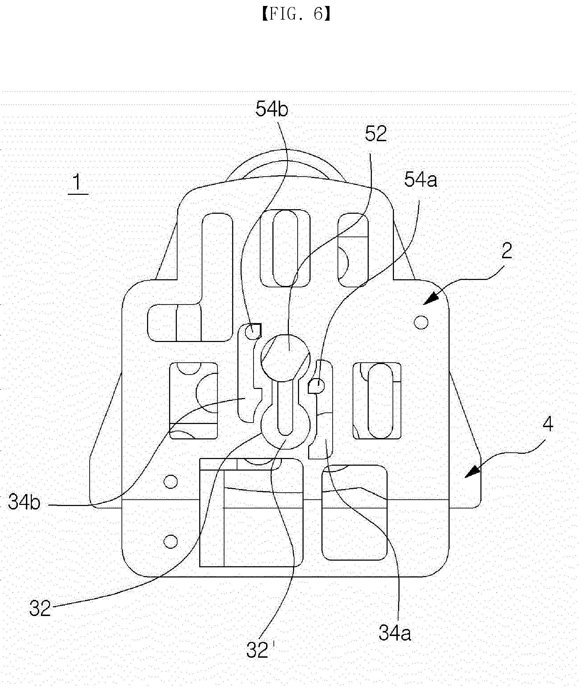

FIG. 6 is a plan view showing the combined cleat 1 in a state in a first stage is fixed. The main lock 52, the first lock 54a, and the second lock 54b are accommodated in the main guide 32, the first guide 34a, and the second guide 34b, respectively, and are fixed. As described above, the main lock 52 of the lower part 4 is fabricated to be inclined from the longitudinal centerline. A support surface 32' is further formed on the main guide 32 to support the bottom surface of the main lock 52.

It can be understood that the reason why the second guide 34b, the main guide 32, and the first guide 34a are arranged in descending order of height from the left side of the drawing is to prevent each guide from being caught on the lock accommodated inside it when the upper part 2 is rotated. The individual locks of the lower part 4 are also arranged in descending order of height from the left side by taking into consideration the rotation of the upper part 2.

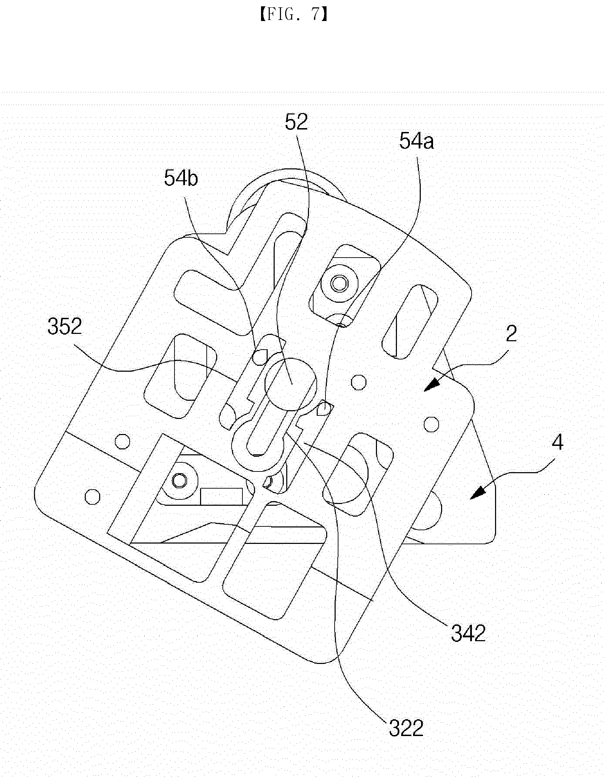

FIG. 7 is a plan view showing the combined cleat 1 in a state in which the fixing of the first stage is released. The main lock 52, the first lock 54a, and the second lock 54b are relatively rotated to become movable along the respective sliding portions 322, 342, and 352.

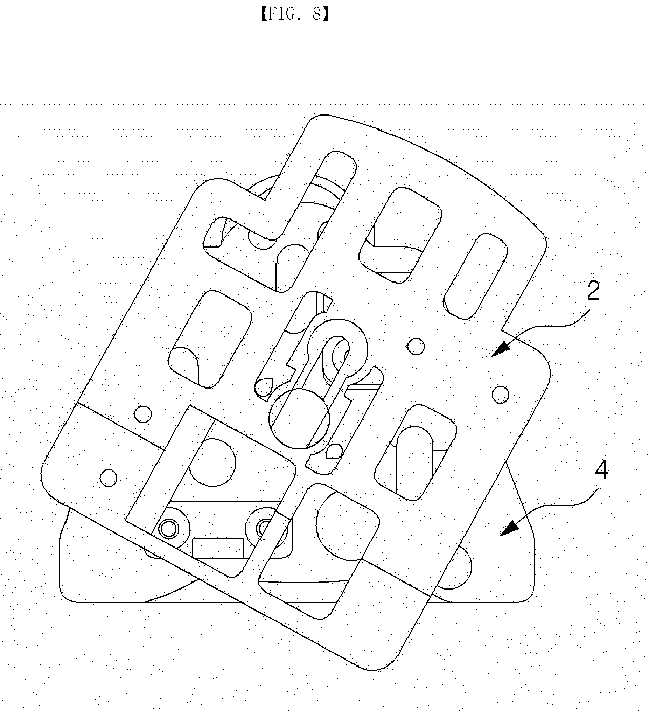

FIG. 8 is a plan view of the combined cleat 1 showing a state in which a shoe is moved upward in the state of FIG. 7 and has just moved to a second stage. The main lock 52, the first lock 54a, and the second lock 54b are maximally moved to the lower sides along the respective sliding portions 322, 342, and352. In this state, when a racer rotates the shoe inward as described above, the upper part 2 is aligned parallel to the lower part 4, and the second stage is fixed.

In order to switch from the second stage to the first stage, the above process may be repeated in reverse.

The mode conversion between the first and second stages described above in the present invention is convenient because it can be performed by simply changing the location of the foot while riding the bicycle. In particular, there is an advantage that the effect of shortening the record can be expected by appropriately distributing power according to the terrain without wasting time during a game.

In the present invention, if the upper part 2 is a movable body and the lower part 4 is a fixed body, a lock part may be formed in the upper part 2 and a guide part may be formed in the lower part 4.

Although some embodiments of the present invention have been described based on the drawings, the shapes and sizes of all the parts may be freely changed as appropriate as long as in order to move the shoe, the upper part 2 of the cleat 1 is configured as a movable body and the lower part 4 is configured as a fixed body, a guide part is formed in the upper part 2 or lower part 4 and a lock part is formed in the lower part 4 or upper part 2 on the contrary, and a position may be switched between the first stage where the pedal shaft is located in front and the second stage where the pedal shaft is located behind the first stage. The guide part and the lock part are not limited to those shown in the drawings, and various modifications may be possible. In particular, the first and second guides serving as auxiliary functions may be eliminated, and only the first main lock and the main guide may be formed. The shape and structure of the cleat 1 except for the lock and guide parts are also not limited, and may be applied to all current or future cleats.

Furthermore, the present invention is not limited to a bicycle, and may be applicable to not only a commercial bicycle but also a bicycle-type exercise device in exercise facilities and gyms as long as the corresponding means is a running means that is manually driven in a state in which the cleat 1 is attached to a shoe.

According to the present invention, an effect is achieved in that speed can be increased by optimally applying a force to a pedal according to the flat ground and the inclined ground during the riding of a bicycle.

Since the power control of the present invention is possible while the bicycle is running, records can be easily and effectively renewed.

The cleat of the present invention has a simple structure, is strong, has excellent durability, and can be manufactured in large quantities.

It is obvious that the scope of the present invention cover the same and equivalent scopes as the claims described below.

## Claims

1. A cleat capable of multi-stage power control, wherein the cleat attached to a shoe connected to a pedal assembly of a two-wheeled manual driving vehicle is divided into an upper part, which is a movable body, and a lower part, which is a fixed body, and a location of a pedal shaft is variable in the shoe during running of the two-wheeled manual driving vehicle.

2. The cleat of claim 1, wherein a guide part is formed in the upper part or lower part, a lock part accommodated in the guide part is formed in the lower part or upper part, and the upper part can rotate and move upward or downward with respect to the lower part.

3. The cleat of claim 2, wherein:
the guide part includes a main guide;
the main guide includes an upper space, a lower space formed opposite to the upper space, and a sliding portion connecting the upper and lower spaces;
the lock part includes a main lock accommodated in the main guide and extending upward toward the upper part; and
the main lock is formed to be inclined from a longitudinal center line.

4. The cleat of claim 3, wherein the main lock has a size equal to or slightly smaller than a width of the upper and lower spaces.

5. The cleat of claim 3, wherein:
the guide part further includes auxiliary guides formed alongside the main guide;
the auxiliary guides include an auxiliary upper space, an auxiliary lower space formed opposite to the auxiliary upper space, and an auxiliary sliding portion connecting between the auxiliary upper space and the auxiliary lower space; and
the lock part further includes auxiliary locks that are accommodated in the auxiliary guides and extend upward toward the upper part.

6. The cleat of claim 5, wherein:
the auxiliary guides include a first guide formed on one side of the main guide and a second guide formed on an opposite side of the main guide; and
the auxiliary locks include a first lock accommodated in the first guide and a second lock accommodated in the second guide.

7. The cleat of claim 3, wherein:
the upper part is rotated in a first direction by rotation of the shoe in the first direction, so that the main lock faces the sliding portion of the main guide; and
the main lock is moved toward the lower space along the sliding portion and accommodated in the lower space by upward movement of the shoe.

8. The cleat of claim 7, wherein, in a state in which the main lock is accommodated in the lower space, the upper part is rotated in a second direction opposite to the first direction by rotation of the shoe in the second direction, so that the main lock comes into contact with an inner surface of a lower space of the main guide and is locked.

9. A shoe comprising the cleat set forth in claim 1 or2.

10. A two-wheeled manual driving vehicle comprising the shoe set forth in claim 9.

11. The cleat of claim 10, wherein the two-wheeled manual driving vehicle is a bicycle.
